Europäisches Patentamt

European Patent Office

Office européen des brevets

(11) Veröffentlichungsnummer: **0 213 473**

**A2**

(12) # EUROPÄISCHE PATENTANMELDUNG

(21) Anmeldenummer: **86111103.7**

(51) Int. Cl.⁴: **C 01 B 33/28**

(22) Anmeldetag: **12.08.86**

(30) Priorität: 26.08.85 DE 3530404

(43) Veröffentlichungstag der Anmeldung:
11.03.87 Patentblatt 87/11

(84) Benannte Vertragsstaaten:
DE FR GB IT NL

(71) Anmelder: HOECHST AKTIENGESELLSCHAFT
Postfach 80 03 20
D-6230 Frankfurt am Main 80(DE)

(72) Erfinder: Rieck, Hans-Peter, Dr.
Staufenstrasse 13a
D-6238 Hofheim am Taunus(DE)

(72) Erfinder: Schott, Martin, Dr.
Königsteiner Strasse 7
D-6374 Steinbach/Taunus(DE)

(72) Erfinder: Blumenthal, Thomas, Dr.
Geisenheimer Strasse 88
D-6000 Frankfurt am Main 71(DE)

(54) Verfahren zur Herstellung von Zeolithen des ZSM-5-Typs.

(57) Es wurde ein Verfahren zur Herstellung eines Zeolithes vom ZSM-5-Typ gefunden, bei welchem dem Ansatz nach Beginn der Kristallisation des Zeolithes eine saure Verbindung zugesetzt wird und gleichzeitig eine Verarmung der Lösung an Aluminiumionen durch Zusatz einer Aluminiumverbindung vorgebeugt wird. Das Verfahren ermöglicht einen hohen Umsatz des eingesetzten $SiO_2$ zu reinem kristallinen Zeolith innerhalb kurzer Reaktionszeiten.

EP 0 213 473 A2

## Verfahren zur Herstellung von Zeolithen des ZSM-5-Typs

Die Erfindung bezieht sich auf ein Verfahren zur Herstellung von silikatreichen Zeolithen des ZSM-5-Typs.

Verschiedene Zeolithe haben große technische Bedeutung erlangt, da sie als Ionenaustauscher, Molekularsiebe und Katalysatoren eingesetzt werden können. In der letzten Zeit finden Zeolithe vom Pentasil-Typ, zu dem auch der Zeolith ZSM-5 gehört, zunehmendes Interesse, da sie bei verschiedenen Alkylierungen sehr wirksam sind, z.B. wird auch die Umwandlung von Methanol in Olefine, Aromaten und andere Kohlenwasserstoffe katalysiert.

Zur Herstellung des Zeolithes ZSM-5 sind verschiedene Verfahren bekannt. Üblicherweise wird die Synthese in Gegenwart verschiedener großer Kationen durchgeführt.

Es ist ein Verfahren zur Herstellung eines Zeolithes des ZSM-5-Typs bekannt, bei welchem eine Alkalioxid-Quelle, eine Siliciumdioxid-Quelle und eine Aluminiumoxid-Quelle in wäßriger Phase, gegebenenfalls in Gegenwart einer die Kristallisation des Zeolithes begünstigenden Substanz, miteinander umgesetzt werden (vgl. DE-OS 33 25 515). Bei diesem Verfahren werden die sauren und die basischen Reaktionskomponenten getrennt, jedoch gleichzeitig in den Reaktor eindosiert.

Es bestand die Aufgabe, ein Verfahren zur Herstellung eines Zeolithes vom ZSM-5-Typ zu finden, welches auf möglichst einfache Weise einen hohen Umsatz des eingesetzten $SiO_2$ zu reinem kristallinen Zeolith innerhalb kurzer Reaktionszeiten ermöglicht.

Es wurde gefunden, daß die Aufgabe gelöst werden kann, wenn man dem Ansatz nach Beginn der Kristallisation des Zeolithes eine saure Verbindung zusetzt und gleichzeitig dafür sorgt, daß die Lösung nicht an Aluminiumionen verarmt.

Gegenstand der Erfindung ist somit ein Verfahren zur Herstellung eines kristallinen Zeolithes des ZSM-5-Typs durch Mischen von Wasser, einer Siliciumdioxid-Quelle, einer Alkalihydroxid-Quelle und einer Aluminiumverbindung und Reagierenlassen der Mischung bei einer Temperatur von 95 bis 230°C, bis der Zeolith auskristallisiert, dadurch gekennzeichnet, daß nach Beginn der Kristallisation der Mischung eine Säure, ein Säureanhydrid oder ein saures Salz in einer Menge von mehr als 5 Milliäquivalent $H^+$/Mol $SiO_2$ der eingesetzten Siliciumdioxid-Quelle und eine Aluminiumverbindung in einem molaren Verhältnis $Al/H^+$ von 0,01 bis 1 zugesetzt werden.

Die zugesetzte saure Verbindung kann eine Säure, ein Säureanhydrid oder ein saures Salz, wie Natriumhydrogensulfat sein. Bevorzugt werden jedoch freie organische oder anorganische starke Säuren, insbesondere Phosphorsäure oder Schwefelsäure.

Der Zeitpunkt des Kristallisationsbeginns, der für die erfindungsgemäße Zugabe der sauren Verbindung wichtig ist, wird durch geeignete Vorversuche ermittelt, indem man Proben entnimmt und den vorhandenen Feststoff mittels Röntgenanalyse untersucht. Sobald aus den Reflexen des Röntgenbeugungsdiagrammes auf eine genügende Menge an kristallinem Zeolith geschlossen werden kann, kann auch die Zugabe der sauren Verbindung erfolgen.

Werden Impfkristalle vor Reaktionsbeginn zugesetzt, so läßt sich der eingebrachte kristalline Anteil durch Bestimmung der Verhältnisse $SiO_2$ in Lösung/$SiO_2$ fest und $SiO_2$ amorph mit ausreichender Genauigkeit feststellen und somit der Beginn der Kristallisation festlegen.

Die Zugabe der sauren Verbindung kann auf einmal, bevorzugt aber kontinuierlich erfolgen. Möglich ist auch die Zugabe der sauren Verbindung in einzelnen Portionen. Es ist vorteilhaft, die Zeitdauer, während der man die saure Verbindung zugibt, so auszudehnen, daß sie bis zum 9-fachen der Zeit zwischen Aufheizen des Reaktionsansatzes und Beginn der Kristallisation beträgt.

Es ist günstig für die Einheitlichkeit des Endproduktes, wenn durch den Säurezusatz von Beginn des Auskristallisierens an bis zur Beendigung der Reaktion stets ein konstantes Molverhältnis $M_2O$ (nicht neutralisiert)/$SiO_2$ eingehalten wird. Zu Säuren hydrolysierende Verbindungen, wie auch festes Aluminiumphosphat, werden in die Berechnung einbezogen.

Von der sauren Verbindung werden mindestens 5 Milliäquivalent, vorzugsweise 20 bis 2000, insbesondere 100 bis 500 Milliäquivalent $H^+$/Mol $SiO_2$ der eingesetzten Siliciumdioxid-Quelle zugegeben. Die Zugabe dieser Menge erfolgt bald nach Beginn des Auskristallisierens des Zeolithes, wobei das Molverhältnis $M_2O$ (nicht neutralisiert)/$SiO_2$, das vor Beginn des Auskristallisierens gewählt wurde, in diesem Fall gerade durch die Zugabe der sauren Verbindung konstant gehalten werden kann. Es wird dabei ein Verhältnis von 1 : 4,5 bis 1 : 8 angestrebt. Aber auch wenn in der Mutterlauge schließlich ein geringeres Verhältnis bleibt, wird durch die nachträgliche Zugabe einer Säure eine Ausbeutesteigerung erreicht.

Bei der Kristallisation eines silikatreichen Zeolithes vom ZSM-5-Typ wird ein Produkt erhalten, dessen molares $SiO_2$/$Na_2O$-Verhältnis in jedem Fall größer ist als jenes der eingesetzten Ausgangsmaterialien, wobei von $Na_2O$-Anteil nur der berücksichtigt wird, der nicht durch eine Säure neutralisiert wird.

Während der Kristallisation wird das $SiO_2$ : $Na_2O$ (nicht neutralisiert)-Verhältnis kleiner, d.h. alkalireicher; der für eine rasche Kristallisation optimale Wert kann nicht aufrecht erhalten werden. Infolge zunehmender Löslichkeit des $SiO_2$ bei steigendem pH-Wert wird bei den hohen Reaktionstemperaturen die Kristallisation langsamer, gleichzeitig steigt die Gefahr der Bildung unerwünschter Nebenprodukte, wie Quarz und bei genügendem Aluminiumgehalt Mordenit.

Durch das erfindungsgemäße Verfahren wird es ermöglicht, während der gesamten Kristallisationszeit das optimale, in Vorversuchen zu ermittelnde $SiO_2$ : $Na_2O$ (nicht neutralisiert)-Verhältnis aufrecht zu halten.

Es ist wichtig, daß während der Reaktion die Lösung nicht an Aluminiumionen verarmt, da sonst, vor allem wenn keine organischen Template zugesetzt worden sind, Nebenprodukte wie Quarz und Alkalischichtsilikate entstehen können. Es wird durch parallele Zugabe einer Aluminiumverbindung zumindest die notwendige minimale Al-Konzentration aufrecht erhalten. Das molare Verhältnis der nachträglich zugeführten Menge $Al/H^+$ beträgt 0,01 - 1, vorzugsweise 0,02 - 0,5 und insbesondere 0,05 - 0.2, wobei $H^+$ die Menge an Protonen darstellt, die durch die saure Verbindung zugegeben wird. Es ist ein Zeichen für die Güte einer ZSM-5-Synthese, daß sie möglichst vollständig den eingebrachten $SiO_2$-Anteil in einen reinen kristallinen Zeolith überführt. Neben der Untersuchung der Menge und der Kristallinität des eingesetzten Feststoffs liefert auch die analytische Zusammensetzung der Lösung wertvolle Hinweise. Die Mutterlauge sollte bei Beendigung der Reaktion einen möglichst geringen $SiO_2$-Gehalt aufweisen. Eine Absenkung von beispielsweise 7 - 20 % auf 1,5 % $SiO_2$ und auch deutlich niedriger ist möglich.

Vorzugsweise wird bei dem erfindungsgemäßen Verfahren ohne Zusatz von organischen Verbindungen gearbeitet.

Das molare Verhältnis der Reaktionspartner $SiO_2$ : $Al_2O_3$ beträgt 15 - 200 : 1, vorzugsweise 20 - 100 : 1. Das molare Verhältnis $M_2O$ (nicht neutralisiert) : $SiO_2$ beträgt ca. $10^{-3}$ - 0,5 : 1, vorzugsweise 0,05 - 0,25 : 1. Das molare Verhältnis $P_2O_5$ : $SiO_2$ ist 0 - 1, vorzugsweise $10^{-3}$ - 0,2 : 1. Das molare Verhältnis $H_2O$ : $SiO_2$ liegt über 10, vorzugsweise liegt es zwischen 20 - 100 : 1.

Als $SiO_2$-Quelle werden folgende Produkte eingesetzt : Aktive Kieselsäure, pyrogene Kieselsäure, Kieselsäuresol, Wasserglastypen, insbesondere preiswertes Natriumwasserglas. Der Gehalt dieser technischen Produkte an Aluminium reicht gelegentlich für die Zeolithsynthese aus. Das $SiO_2$ : $Al_2O_3$-Molverhältnis kann verringert werden, indem eine Aluminiumverbindung wie Aluminiumhydroxid, Hydrargillit, Aluminiumsulfat oder insbesondere Aluminiumphosphat, vorzugsweise in schwerlöslicher Form, zugesetzt wird. Alkalihydroxid kann in freier, fester Form in Lösung oder auch in Form des Alkalioxidanteils eines zugegebenen Wasserglases oder eines Alkalialuminats verwendet werden.

Auch können alkalisch reagierende Substanzen, z.B. Alkalicarbonat (Soda), zugesetzt werden. Bei dem Alkalimetall handelt es sich vorzugsweise um Natrium.

Der pH-Bereich der zu erhitzenden wäßrigen Lösung oder Suspension soll im Bereich von 8 - 12,5, vorzugsweise im Bereich zwischen 10 und 11 liegen. Es kann zur Einstellung des pH-Wertes eine Säure, beispielsweise Schwefelsäure, Phosphorsäure oder ähnliche Mineralsäuren dem Reaktionsansatz von Anfang an zugefügt werden.

Das erfindungsgemäße Verfahren wird vorzugsweise bei einer Temperatur zwischen 150 und 220°C, insbesondere im Bereich zwischen 180 und 210°C durchgeführt. Die möglichen Temperaturgrenzen liegen im Bereich von etwa 95 - 230°C.

Kristallkeime sind nicht unbedingt erforderlich; ihre Anwesenheit führt jedoch zu einer Verkürzung der Reaktionszeit und wird daher im Regelfall angestrebt. Die Menge an Impfkristallen kann bei der üblicherweise durchgeführten diskontinuierlichen Reaktionsführung bis zu 30 Gew.-%, bezogen auf den $SiO_2$-Anteil des zugesetzten Alkalisilikates, betragen, Impfkristallzusätze unter 0,01 Gew.-% haben keinen erkennbaren Effekt mehr. Es sollten daher mindestens 0,5 Gew.-% Impfkristalle in der wäßrigen Lösung zum Reaktionsbeginn anwesend sein. Anstatt Impfkristalle zuzusetzen, kann es in vielen Fällen ausreichend sein, die geringen Reste eines früheren Ansatzes, die sich z.B. noch im Reaktionsgefäß befinden, auszunutzen. Gelegentlich wird dies durch einen Umpump bei einer kontinuierlichen oder halbkontinuierlichen Verfahrensweise erreicht.

Die Reaktion wird hydrothermal unter dem Eigendruck der flüssigen Phase durchgeführt. Zur Kristallisation sind mitunter, vor allem bei Temperaturen oberhalb 180°C, nur wenige Stunden erforderlich. Es können jedoch auch Reaktionszeiten von mehreren Tagen notwendig sein. Man kann die von den jeweiligen Reaktionsbedingungen abhängigen erforderlichen Reaktionszeiten durch Röntgenbeugungsdiagrmme einzelner Proben ermitteln. Man wird dazu bei einigen Vorversuchen in regelmäßigen Abständen Proben entnehmen und die Röntgendiagramme aufnehmen. So läßt sich bequem das Reaktionsende feststellen.

Neben Aluminium und Phosphor können bei der Synthese auch andere Elemente, insbesondere Bor, Indium oder Gallium in geringen Mengen in das Kristallgitter eingebaut werden. Ebenso können Metalle der ersten und zweiten Hauptgruppe oder der dritten bis achten Nebengruppe während der Reaktion oder auch nachträglich eingebaut werden. bei geringen Anteilen dieser Elemente wird die Kristallstruktur des Zeolithes nicht wesentlich verändert. Die Menge an Metall, die in den Zeolith des ZSM-5-Typs eingebaut oder eingelagert wird, kann bis zu 25 Gew.-% betragen. Eine nachträgliche Eingabe der Elemente kann so erfolgen, daß der Zeolith mit der wäßrigen Lösung des entsprechenden Metalls imprägniert wird.

Im folgenden soll die Herstellung eines ZSM-5-Typs nach der Erfindung in einem Rührkessel näher erläutert werden. Meist wird man bei einer Temperatur über 100°C arbeiten. Der Druck, der sich dann über dem wäßrigen Reaktionsmedium einstellt, zwingt zum Arbeiten im Autoklaven. Eine zusätzliche Erhöhung des Druckes, z.B. durch Zugabe eines Inertgases, bringt keine Vorteile. Auch während der Zugabe der Reaktionskomponente soll die Temperatur des Kessels oder des Reaktionsgefäßes im Bereich der angegebenen Temperatur liegen. Dies läßt sich leicht ermöglichen, wenn die Lösungen oder Aufschlämmungen der zugegebenen Substanzen auf eine entsprechende Temperatur vorgeheizt waren. Der Druck im Reaktionsgefäß liegt unter 100 bar, im allgemeinen reichen Drücke von 1 - 30 bar.

Sofern der Druck im Rührkessel oberhalb von 1 bar liegt, ist für das Eindosieren eine entsprechende Pumpeinrichtung vorzusehen. Hierbei wird für die sauer regierenden Verbindungen vorteilhafterweise eine getrennte Anlage verwendet. Die Ausgangsprodukte können gegebenenfalls nacheinander zugegeben werden. Falls eine Kesselkaskade verwendet wird, ist es vorteilhaft, die Zugabedauer jeder Komponente anzpassen.

Die Verweilzeit wird so eingerichtet, daß für die zweite Hälfte der eigentlichen Reaktion und die Nachkristallisation etw 90 % der Gesamtreaktionszeit zur Verfügung stehen oder bei einer 2-Kessel-Anlage wird für den zweiten Kessel die 10fache Verweilzeit des Ansatzes im ersten Kessel vorgesehen. So kann beispielsweise etwa 10 % der Gesamtreaktionszeit vor dem Kristallisationsbeginn liegen. In den verbleibenden 90 % der gesamten Reaktionszeit werden dann kontinuierlich oder diskontinuierlich Aluminiumverbindung und/oder Mineralsäuren zudosiert.

Die Gesamtreaktionszeit ist sowohl beim Chargenbetrieb als auch bei kontinuierlicher oder halbkontinuierlicher Fahrweise aus wirtschaftlichen Gründen zu minimieren. Mindestens 80 - 90 % des eingegebenen Alkalisilikates sollten in das gewünschte ZSM-5 überführt werden.

Obwohl praktisch die gesamte Menge des $SiO_2$-Ausgangsmaterials in einen entsprechenden ZSM-5-Zeolith umgewandelt werden kann, zwingen wirtschaftliche Gründe meist dazu, sich für relativ kurze Verweilzeiten mit einem nicht 100 %igem Umsatz zu dem gewünschten kristallinen Produkt zu entscheiden.

Es ist der besondere Vorteil dieses Verfahrens, durch die Zugabe einer sauren Verbindung nach dem eigentlichen Reaktionsbeginn die Ausbeute auf ein wirtschaftlich interessierendes Maß erhöhen zu können, wobei gleichzeitig die Reaktionszeit kurz und das Produkt sehr rein ist.

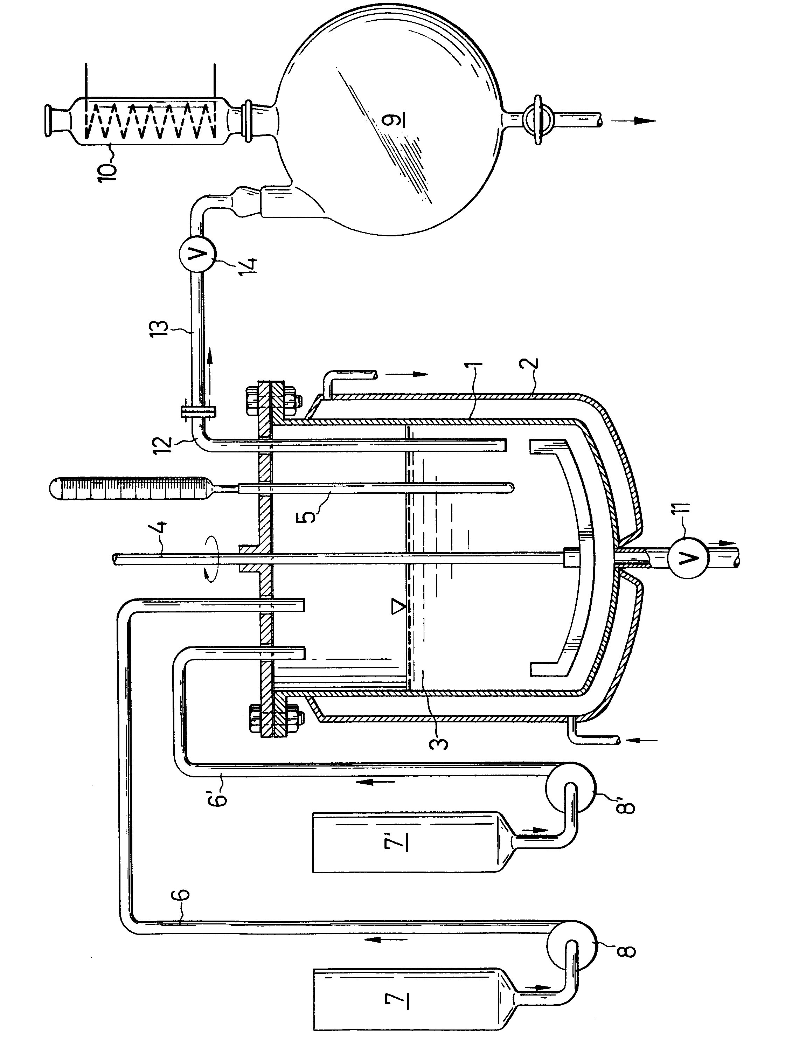

In der beiliegenden Zeichnung wird eine erfindungsgemäß verwendbare Apparatur bildlich dargestellt. Die verwendete Apparatur entspricht der Laborapparatur in vergrößertem Maßstab. Der wesentliche Teil ist der Rührautoklav (1). Dieser Rührautoklav hat ein Nettovolumen von etwa 2 l bei einem Durchmesser von etwa 14 cm und einer maximalen Innenhöhe von 17,5 cm. Beheizbar ist dieses Gefäß durch den Heizmantel (2), der normalerweise mit einem Heizöl gefüllt ist. Die in dem Rührautoklaven hergestellte Reaktionsmischung aus den einzelnen Komponenten wird durch den Rührer (4) gemischt, wobei verschiedene Rührgeschwindigkeiten eingestellt werden können. Die Innentemperatur wird mit einem Thermometer in der Thermometerhülse (5) kontrolliert. Die Temperaturmessung wird zur Regelung der Öltemperatur verwendet, um eine Temperaturkonstanz in dem Rührautoklaven zu gewährleisten. Die Ausgangsstoffe werden in Vorratsgefäßen (7) und (7') vorgelegt und gegebenenfalls temperiert. Mit Hilfe von Pumpen (8) und (8') werden diese Ausgangsprodukte über die Leitungen (6) und (6') dem Rührauto-klaven zugeführt. So enthält das eine Gefäß (7) die alkalischen Reaktionskomponenenten, beispielsweise Wasserglas, Natriumaluminat oder Alkalilauge und das andere Gefäß (7') die sauren Ausgangsprodukte und feste Aluminiumverbindung.

Durch Einstellung von Hubhöhe und Frequenz der Druckpumpen kann die Zugabemenge und damit die Zugabedauer gesteuert werden. Die Zuleitungen sind durch Ventile verschlossen. Der Rührautoklav ist weiterhin aus Sicherheitsgründen mit einem Manometer und mit einem Sicherheitsventil augestattet. Manometer, Sicherheitsventil und die einzelnen Ventile sind hier nicht gezeichnet.

Nach Beendigung jedes Versuches wird über das Bodenauslaßventil (11) die Reaktionsmischung ausgetragen. Für eine eventuelle teilweise Entleerung des Autoklaven wird das Produkt über das Steigrohr (12) und die Leitung (13) entnommen. Diese Leitung (13) ist mit einem Ventil (14) versehen. Durch eine entsprechende Regelung dieses Ventils (14) kann man das Produkt portionsweise oder kontinuierlich austragen. Auch gewünschte Proben können entnommen werden. Der Füllstand im Reaktionsgefäß (Reaktionsmischung= 3) entspricht dann in etwa der Innenhöhe des Steigrohres und maximal der Innenhöhe des Autoklaven. Das Produkt wird über eine Leitung (13) in einen üblichen 2 1-2-Hals-Kolben (9) überführt, der mit einem Rückflußkühler zur Kondensation des Wasserdampfes versehen ist. Der Kolben (9) wird portionsweise oder kontinuierlich entleert. Das Produkt wird abfiltriert, gewaschen und in bekannter Weise aufgearbeitet.

Vergleichsbeispiel

50 1 Wasser und 9,27 kg Natronwasserglas (27 % $SiO_2$, 8,4 % $Na_2O$) wurden mit 500 g Impfkristallen aus einem früheren Versuch im Autoklaven vorgelegt.

50 1 Wasser und 46,33 kg Wasserglas wurden mit der einen Pumpe und 50 1 Wasser, 4 kg 75 %ige Phosphorsäure und 1,5 kg $AlPO_4$ (Quarzmodifikation) wurden mit einer zweiten Pumpe unter gutem Rühren zudosiert. Gleichzeitig wurde die Kesseltemperatur erhöht. Die Reaktionsmischung wurde nach beendeter Zugabe noch 3,5 h bei 207°C gerührt. Der Feststoff wurde nach dem Abkühlen filtriert, gewaschen und 22 h bei 140°C getrocknet. Man erhielt 12,33 kg Zeolith vom ZSM-5-Typ (Röntgenbeugungsdiagramm s. Tabelle 1). Das Filtrat hatte eine Dichte von 1,057 g/cm$^3$ und enthielt neben etwa 1,8 % $Na^+$ und 2,0 % $PO_4^{3-}$ noch 2,2 % $SiO_2$.

Beispiel

50 1 Wasser und 9,27 kg Natronwasserglas (27 %, $SiO_2$, 8,4 % $Na_2O$) wurden mit 500 g Impfkristallen aus einem früheren Versuch im Autoklaven vorgelegt.

50 1 Wasser und 46,33 kg Wasserglas wurden mit der einen Pumpe und 50 1 Wasser, 4,0 kg 75 %ige Phosphorsäure und 1,5 kg $AlPO_4$ mit einer anderen Pumpe unter gutem Rühren zudosiert. Gleichzeitig wurde dabei die Kesseltemperatur erhöht. Die Reaktionsmischung wurde zuerst 1,5 h bei 207°C gerührt; anschließend wurden nochmals 250 g $AlPO_4$ und 5 1 27 %ige Phosphorsäure zudosiert. Die Reaktionsmischung wurde noch 2 h bei 207°C gerührt. Der Feststoff wurde nach dem Abkühlen filtriert, gewaschen und 22 h bei 140°C getrocknet. Man erhielt 14,31 kg Zeolith vom ZSM-5-Typ. Das entspricht einer Steigerung der Ausbeute um 16 %, verglichen mit dem Vergleichsbeispiel (Röntgenbeugungsdiagramm s. Tabelle 2). das Filtrat hatte eine Dichte von 1,046 g/cm$^3$ und enthielt neben etwa 1,6 % $Na^+$ und 2,1 % $PO_4^{3-}$ noch 0,7 % $SiO_2$ ($\doteq$ 32 % der $SiO_2$-Konzentration des Filtrates im Vergleichsbeispiel).

| d-Wert | I/Io | Tabelle 0213473 |
|--------|------|------|
| 11,25 | 64 | |
| 10,16 | 34 | |
| 10,04 | 31 | |
| 9,82 | 17 | |
| 9,06 | 2 | |
| 7,49 | 4 | |
| 6,75 | 7 | |
| 6,41 | 13 | |
| 6,04 | 16 | |
| 5,75 | 12 | |
| 5,60 | 13 | |
| 5,40 | 3 | |
| 5,17 | 3 | |
| 5,05 | 5 | |
| 5,01 | 7 | |
| 4,64 | 7 | |
| 4,38 | 11 | |
| 4,29 | 15 | |
| 4,11 | 5 | |
| 4,04 | 9 | |
| 3,86 | 100 | |
| 3,83 | 72 | |
| 3,77 | 40 | |
| 3,74 | 52 | |
| 3,67 | 33 | |
| 3,62 | 5 | |
| 3,50 | 9 | |
| 3,46 | 13 | |
| 3,42 | 5 | |
| 3,37 | 8 | |
| 3,32 | 12 | |
| 3,27 | 6 | |
| 3,19 | 3 | |
| 3,16 | 4 | |
| 3,06 | 15 | |
| 3,01 | 15 | |
| 2,99 | 15 | |
| 2,96 | 13 | |
| 2,88 | 4 | |
| 2,84 | 2 | |
| 2,74 | 6 | |
| 2,69 | 2 | |
| 2,67 | 2 | |
| 2,62 | 4 | |
| 2,53 | 4 | |
| 2,50 | 7 | |
| 2,42 | 4 | |
| 2,40 | 4 | |

| d-Wert | I/Io | Tabelle 2 |
|--------|------|-----------|
| 11,25 | 62 | |
| 10,16 | 35 | |
| 10,04 | 33 | |
| 9,82 | 16 | |
| 9,06 | 3 | |
| 7,49 | 4 | |
| 6,75 | 8 | |
| 6,41 | 13 | |
| 6,04 | 16 | |
| 5,75 | 12 | |
| 5,60 | 13 | |
| 5,38 | 4 | |
| 5,17 | 3 | |
| 5,06 | 5 | |
| 5,01 | 8 | |
| 4,64 | 9 | |
| 4,38 | 13 | |
| 4,28 | 16 | |
| 4,10 | 5 | |
| 4,02 | 10 | |
| 3,87 | 100 | |
| 3,83 | 69 | |
| 3,76 | 40 | |
| 3,74 | 53 | |
| 3,66 | 31 | |
| 3,61 | 6 | |
| 3,49 | 9 | |
| 3,46 | 14 | |
| 3,37 | 9 | |
| 3,32 | 13 | |
| 3,26 | 6 | |
| 3,20 | 3 | |
| 3,15 | 4 | |
| 3,06 | 14 | |
| 3,00 | 15 | |
| 2,96 | 7 | |
| 2,88 | 3 | |
| 2,84 | 2 | |
| 2,74 | 6 | |
| 2,70 | 3 | |
| 2,67 | 2 | |
| 2,62 | 5 | |
| 2,52 | 4 | |
| 2,50 | 7 | |
| 2,42 | 3 | |
| 2,40 | 4 | |

Patentansprüche:

1. Verfahren zur Herstellung eines kristallinen Zeolithes des ZSM-5-Typs durch Mischen von Wasser, einer Siliciumdioxid-Quelle, einer Alkalihydroxid-Quelle und einer Aluminiumverbindung und Reagierenlassen der Mischung bei einer Temperatur von 95 bis 230°C, bis der Zeolith auskristallisiert, dadurch gekennzeichnet, daß nach Beginn der Kristallisation der Mischung eine Säure, ein Säureanhydrid oder ein saures Salz in einer Menge von mehr als 5 Milliäquivalent $H^+$/Mol $SiO_2$ der eingesetzten Siliciumdioxid-Quelle und eine Aluminiumverbindung in einem molaren Verhältnis $Al/H^+$ von 0,01 bis 1 zugesetzt werden.

2. Verfahren nach Anspruch 1, dadurch gekennzeichnet, daß die nach Beginn der Kristallisation der Mischung zugesetzte Säure eine starke anorganische Säure und das zugesetzte saure Salz ein Hydrogensulfat ist.

3. Verfahren nach Anspruch 1, dadurch gekennzeichnet, daß die nach Beginn der Kristallisation der Mischung zugesetzte Aluminiumverbindung in einem molaren Verhältnis $Al/H^+$ von 0,02 bis 0,5 eingesetzt wird.

4. Verfahren nach Anspruch 1, dadurch gekennzeichnet, daß eine Templat-Quelle zugegen ist.

5. Verfahren nach Anspruch 4, dadurch gekennzeichnet, daß die Templat-Quelle festes $AlPO_4$ ist.

6. Verfahren nach Anspruch 1, dadurch gekennzeichnet, daß in die Mischung Impfkristalle eingebracht werden.

0213473